(19) 

**Europäisches Patentamt**
**European Patent Office**
**Office européen des brevets**

(11) **EP 4 391 422 A1**

(12) **EUROPEAN PATENT APPLICATION**

(43) Date of publication:
**26.06.2024 Bulletin 2024/26**

(21) Application number: **23219164.3**

(22) Date of filing: **21.12.2023**

(51) International Patent Classification (IPC):
$H04B\ 17/336^{(2015.01)}$    $H04B\ 17/309^{(2015.01)}$

(52) Cooperative Patent Classification (CPC):
**H04B 17/336; H04B 17/346;** G06N 20/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 GB 202219621**

(71) Applicant: **Airbus Defence and Space Limited Stevenage, Hertfordshire SG1 2AS (GB)**

(72) Inventor: **Dodgson, Terence Stevenage, SG1 2AS (GB)**

(74) Representative: **Abel & Imray LLP Westpoint Building James Street West Bath BA1 2DA (GB)**

(54) **DETERMINATION OF SIGNAL CHARACTERISTICS**

(57)    A method (500) of determining an estimate of a characteristic of a set of samples, the method comprising, at a processor:
receiving (501) the set of samples;
extracting (503), from the samples, a value of at least one feature indicative of the characteristic;
providing (505) the at least one extracted feature value as an input to a machine learning agent; and
causing (507) the machine learning agent to process the at least one extracted feature value to provide an output indicative of the estimate of the characteristic, wherein: the output of the machine learning agent is a vector comprising elements corresponding to the probabilities associated with different predetermined characteristic values.

Fig. 2

EP 4 391 422 A1

**Description**

Technical Field

The present disclosure concerns methods of determining signal characteristics. More particularly, but not exclusively, this disclosure concerns measures, including methods, apparatus and computer programs, for use in determining signal characteristics.

Background

In communications systems, for example, there is often a need or a desire to calculate a signal-to-noise ratio (SNR) characteristic of a received signal. This can be used to determine expected signal quality or to assist with further performance related measurements such as bit error rate (BER).

Known methods for estimating SNR characteristics include blind methods and data-aided methods. Blind methods refer to estimating the SNR from a received signal when no extra (assisting) data is sent. An example of extra (assisting) data would be a pilot data sequence which is transmitted from the transmitter and known at the receiver. Known blind methods include the second moment, fourth moment (M2M4) estimator and the signal to variance ratio (SVR) estimator. A known data-aided method is the error vector magnitude (EVM).

M2M4 and SVR have the disadvantages of relatively low accuracy and accuracy fluctuation over the range of SNRs they might be used for. Data-aided methods have the disadvantage of requiring the transmission of extra (assisting) data which results in greater power consumption at the transmitter and reduced overall channel capacity for actual data transmission.

It is an object of the present disclosure to provide improved methods for estimating a signal-to-noise ratio (SNR) characteristic of a received signal, which do not suffer from the disadvantages set out above. In particular, it is an object of the present disclosure to more accurately calculate the Signal to Noise Ratio (SNR) of a transmit/receive system, for example, and to provide consistent accuracy across a relatively large SNR range.

Summary

According to a first aspect, there is provided a method of determining an estimate of a characteristic of a set of samples, the method comprising, at a processor:

receiving the set of samples;
extracting, from the samples, a value of at least one feature indicative of the characteristic;
providing the at least one extracted feature value as an input to a machine learning agent; and
causing the machine learning agent to process at least one extracted feature value to provide an output indicative of the estimate of the characteristic, wherein:
the output of the machine learning agent is a vector comprising elements corresponding to the probabilities associated with different predetermined characteristic values.

In embodiments, the method may further comprise obtaining the estimate of the characteristic by multiplying each element of the vector with its associated predetermined characteristic value.

In embodiments, the method further comprises normalizing the output vector of the machine learning agent.

The predetermined characteristic values may be held in a lookup table. Alternatively, the predetermined characteristic values may be given directly by the vector element index.

In embodiments, in the output vector of the machine learning agent, all vector elements are equal to zero except for two adjacent vector elements.

The set of samples may comprise samples of a signal in a communications system. The characteristic may be a signal-to-noise ratio characteristic. The signal-to-noise ratio characteristic may be the ratio of the signal power to the noise power, expressed either on a decibel scale or a linear scale. The signal-to-noise ratio characteristic may be the signal-to-noise ratio per bit, $E_b/N_0$.

The at least one feature may comprise the maximum received signal amplitude and/or the minimum received signal amplitude.

The at least one feature may comprise the in-phase part, $\mu_r$, of the mean of the signal samples, $M_1$ and/or the

quadrature part $\mu_i$ of the mean of the signal samples, wherein $M_1 = \mu_r + j.\mu_i = \frac{1}{N}\sum_{t=0}^{t=N-1} z_t$ , wherein $N$ is the total number of samples, $z_t$.

The at least one feature may comprise the variance, $M_2$, of the signal samples, wherein

$$M_2 = \frac{1}{N}\sum_{t=0}^{t=N-1}(z_t - M_1)(z_t - M_1)^*$$

, wherein $M_1$ is the mean of the signal samples, $z_t$, and $N$ is the total number of samples.

The at least one feature may comprise the in-phase part, $\alpha_r$, of the third moment of the signal samples, $M_3$,

$$\alpha_r = \frac{1}{N.M_2^{3/2}}\sum_{t=0}^{t=N-1}(x_t - \mu_r)^3$$

wherein and/or the quadrature part, $\alpha_i$, of the third moment, wherein

$$\alpha_i = \frac{1}{N.M_2^{3/2}}\sum_{t=0}^{t=N-1}(y_t - \mu_i)^3$$

, wherein $M_2$ is the variance of the signal samples $z_t = x_t + j.\, y_t$ and $N$ is the total number of samples.

The at least one feature may comprises the fourth moment of the signal samples, $M_4$, wherein

$$M_4 = \frac{1}{N}\sum_{t=0}^{t=N-1}[(z_t - M_1)(z_t - M_1)^*]^2$$

, $N$ is the total number of samples $z_t$, and $M_1$ is the first moment.

The at least one feature may comprise the Kurtosis value, which is given by the fourth moment of the signal samples, $M_4$, normalized by the second moment squared of the signal samples, $M_2^2$, wherein

$$M_4 = \frac{1}{N}\sum_{t=0}^{t=N-1}[(z_t - M_1)(z_t - M_1)^*]^2$$

, $N$ is the total number of samples $z_t$,

$$M_2 = \frac{1}{N}\sum_{t=0}^{t=N-1}(z_t - M_1)(z_t - M_1)^*$$

, and wherein $M_1$ is the mean of the signal samples.

The at least one feature may comprise the critical part, $\lambda$, of the $M_2M_4$ estimator of the signal samples, wherein

$\lambda$ = 2. $M_2^2$ - $M_4$, wherein $M_4 = \frac{1}{N}\sum_{t=0}^{t=N-1}[(z_t -$ $M_1)(z_t - M_1)^*]^2$, $N$ is the total number of samples $z_t$,

$$M_2 = \frac{1}{N}\sum_{t=0}^{t=N-1}(z_t -$$

$M_1)(z_t - M_1)^*$, and wherein $M_1$ is the mean of the signal samples.

The at least one feature may comprise the critical part, $\beta$, of the signal to variance ratio, wherein $\beta = \frac{\alpha}{M_4 - \alpha}$

, and $\alpha = \sum(z_n z_n^*)(z_{n-1}z_{n-1}^*)$.

The machine learning agent may comprise an artificial neural network, ANN. The ANN may have multiple output neurons which are combined. In this manner, the accuracy of the estimation may be improved.

In embodiments, the method further comprises prior to the step of providing the at least one extracted feature value as an input to the machine learning agent, performing an initial training process of the machine learning agent, wherein the initial training process is continued until a pre-determined accuracy is achieved.

In embodiments, the method further comprises periodically updating the training of the machine learning agent when in use. Updating the training of the machine learning agent may be performed on the basis of the received signal samples.

According to a second aspect, there is provided a computer program comprising a set of instructions, which, when executed by computerised apparatus, cause the computerised apparatus to perform a method of determining an estimate of a characteristic of a set of samples, the method comprising, at a processor:

receiving the set of samples;
extracting, from the samples, a value of at least one feature indicative of the characteristic;
providing the at least one extracted feature value as an input to a machine learning agent; and
causing the machine learning agent to process the at least one extracted feature value to provide an output indicative of the estimate of the characteristic, wherein:
the output of the machine learning agent is a vector comprising elements corresponding to the probabilities associated with different predetermined characteristic values.

According to a third aspect, there is provided apparatus for determining an estimate of a characteristic of a set of samples, the apparatus comprising a processor configured to:

receive the set of samples;
extract, from the samples, a value of at least one feature indicative of the characteristic;
provide the at least one extracted feature value as an input to a machine learning agent; and
cause the machine learning agent to process the at least one extracted feature value to provide an output indicative of the estimate of the characteristic, wherein:
the output of the machine learning agent is a vector comprising elements corresponding to the probabilities associated with different predetermined characteristic values.

It will of course be appreciated that features described in relation to one aspect may be incorporated into other aspects.

Description of the Drawings

Embodiments of the present disclosure will now be described by way of example only with reference to the accompanying schematic drawings of which:

Figure 1 is a flow diagram corresponding to a method of determining a signal-to-noise ratio (SNR) characteristic of a signal according to embodiments of the disclosure;
Figure 2 is a block diagram representing a communications system implementation of the method of Figure 1;
Figure 3 illustrates properties of an artificial neural network (ANN) according to embodiments of the disclosure;
Figure 4 illustrates how inputs to the ANN can be represented by a matrix of column vectors according to embodiments of the disclosure;
Figure 5 is a flow diagram corresponding to a method of determining a characteristic of a set of samples according to embodiments of the disclosure;
Figures 6 and 7 illustrate probability vectors which form the output of the ANN according to embodiments of the disclosure;
Figure 8 illustrates back propagation, construction and comparison of ANN output probability vectors and ANN output target (probability) vectors according to embodiments of the disclosure;
Figure 9 is a flow diagram that represents an example of training an ANN to be able to estimate the SNR of a received signal in a communications system according to embodiments of the disclosure; and
Figures 10 and 11 show simulated results for SNR estimation using methods according to the present disclosure and using classical methods.

Detailed Description

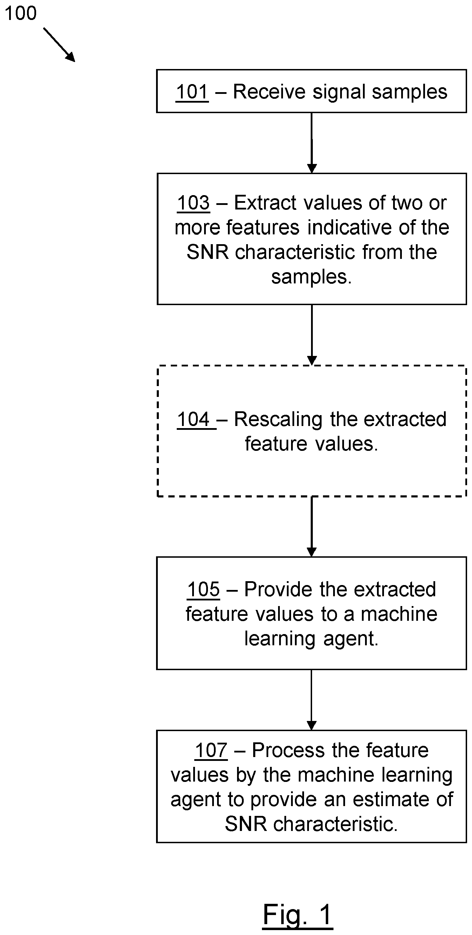

Figure 1 is a flow diagram corresponding to a method 100 of determining an estimate of a signal-to-noise ratio (SNR) characteristic of a signal according to embodiments of the disclosure. In a first step 101, the method comprises receiving samples of the signal at a processor 220. Then in a following step 103, values of two or more different features indicative of the signal-to-noise ratio characteristic are extracted from the samples. Examples of such features for estimating an SNR characteristic of a signal are given below. In embodiments, in a following, optional step 104 the extracted feature values are rescaled, as expanded upon below. In a following step 105, the two or more extracted feature values are provided as inputs to a machine learning agent. In a final step 107, the extracted feature values are processed by the machine learning agent to provide the estimate of the signal-to-noise ratio characteristic.

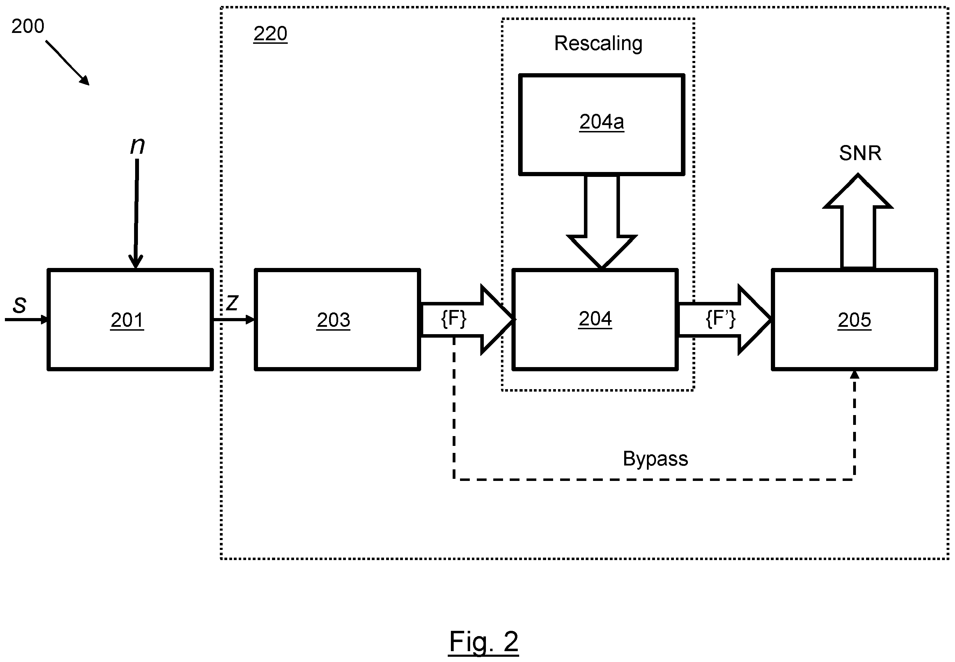

Figure 2 is a block diagram 200 representing a communications system implementation of the method of Figure 1 according to embodiments of the present disclosure. A clean, transmitted (Tx) signal, $s = x+jy$, with transmit power S, is seen on the left of Figure 2. This is the signal at transmission time. The signal from which a single-to-noise ratio (SNR) characteristic is to be estimated is the received (noisy) version of this signal, z, which will constitute the clean signal, s $=x+jy$, with e.g. channel and/or system noise, $n = n_x + jn_y$ (having noise power N). z is thus a complex signal sequence of noisy complex samples given by $z = (x + n_x) + j(y + n_y) = s+n$. The noisy channel is represented by block 201 in Figure 2. The SNR characteristic may be the ratio of the signal power to the noise power, S/N, expressed either on a decibel scale or on a linear scale. Alternatively, or additionally, the SNR characteristic may be theEnergy per bit to Noise density ratio, $E_b/N_o$. Region 220 represents a processor which processes the noisy, received signal z according to the methods disclosed herein.

Next, in block 203, values of two or more different features {F} indicative of the SNR characteristic to be estimated are extracted from the received signal samples, z. Features indicative of the SNR characteristic should be understood to mean features derived from the signal samples that in some way vary in accordance with the SNR characteristic and that are therefore sensitive to different values of the SNR characteristic. Many such features are envisaged as being applicable to methods according to the present disclosure.

For example, in embodiments the two or more features comprise the maximum received signal amplitude and/or the minimum received signal amplitude. In embodiments, the two or more extracted features comprise the in-phase part, $\mu_r$, of the mean of the signal samples, $M_1$ and/or the quadrature part $\mu_i$ of the mean of the signal samples, wherein

$$M_1 = \mu_r + j.\mu_i = \frac{1}{N}\sum_{t=0}^{t=N-1} z_t$$

, wherein $N$ is the total number of samples, $z_t$. In embodiments, the two or more features comprise the variance, $M_2$, of the signal samples, wherein

$$M_2 = \frac{1}{N}\sum_{t=0}^{t=N-1}(z_t - M_1)(z_t - M_1)^*$$

. In embodiments, the two or more features comprise the in-phase part, $\alpha_r$, of the third moment, $M_3$, wherein

$$\alpha_r = \frac{1}{N.M_2^{3/2}}\sum_{t=0}^{t=N-1}(x_t - \mu_r)^3$$

and/or the quadrature part, $\alpha_i$, of the third moment, wherein

$$\alpha_i = \frac{1}{N.M_2^{3/2}}\sum_{t=0}^{t=N-1}(y_t - \mu_i)^3$$

. In embodiments, the two or more features comprise the fourth moment, $M_4$, wherein

$$M_4 = \frac{1}{N}\sum_{t=0}^{t=N-1}[(z_t - M_1)(z_t - M_1)^*]^2$$

. In embodiments, the two or more features comprise the Kurtosis value, which is given by the fourth moment, $M_4$, normalized by the second moment squared, $M_2^2$. In embodiments, the two or more features comprise the critical part, $\lambda$, of the $M_2M_4$ estimator, wherein $\lambda = 2.M_2^2 - M_4$. In embodiments, the two or more features comprise the critical part, $\beta$, of the signal to variance ratio, wherein

$$\beta = \frac{\alpha}{M_4 - \alpha}$$

, and $\alpha = \sum(z_n z_n^*)(z_{n-1} z_{n-1}^*)$.

It should be appreciated that in methods according to embodiments of the present disclosure, unlike prior art SNR estimators, the extracted features are not limited to a particular sub-set of the received signal features. For example, the M2M4 estimator is limited to the first, second and fourth moment features, and the SVR estimator is limited to the first, fourth and pre-post fourth moment.

Following feature value extraction in block 203, methods according to embodiments of the present disclosure may proceed directly to block 205 (i.e. following the path labelled "Bypass" in Figure 2). In this manner, the two or more extracted feature values {F} are provided directly as inputs to a machine learning agent, such as an artificial neural network (ANN), for example. The machine learning agent is represented by block 205. The machine learning agent processes the extracted feature values {F} to provide an estimate of the SNR characteristic. Specific, example implementation details are expanded upon below.

Alternatively, following feature extraction in block 203, methods according to embodiments of the present disclosure may then proceed to block 204, which represents a rescaling process. In embodiments, the rescaling involves adjusting the relative weightings of at least two of the extracted feature values. By way of example, suppose two of the extracted features consist of the maximum received signal amplitude and the minimum received signal amplitude. For a given communications system, each of these features will have a typical range of values. As an example, adjusting the relative weightings of at least two of the extracted feature values may involve multiplying the maximum received signal amplitude by a factor of 1.5 and leaving the minimum received signal amplitude unchanged, thereby weighting the maximum received signal amplitude 50% more than the minimum received signal amplitude.

In embodiments, the rescaling involves normalising at least two of the extracted features. Normalisation may mean, for example, that after normalisation, the mean of each of the feature values is equal to zero and the standard deviation of each of the feature values is equal to one. By way of example, suppose two of the at least two extracted features consist of the maximum received signal amplitude and the minimum received signal amplitude. For a given communications system each of these features will have a typical range of values. This range can be determined during training of the machine learning agent, or from real-world measurements. Then, the rescaling process may involve subtracting, from each value of the maximum received signal amplitude (corresponding to a value obtained from a given set of received signal samples, e.g. 1024 samples), the mean maximum received signal amplitude, and dividing each value of the maximum received signal amplitude by the standard deviation of the maximum received signal amplitude. The same applies, *mutatis mutandis,* to other extracted features, such as the minimum received signal amplitude, for example.

In this manner, due to normalisation, the extracted features have similar weightings which may improve the ability of the machine learning agent to process the different features equally. For example, there may be some features that have absolute values which are very large and others that are very small. In order to ensure smaller values are not "swamped" by larger values, the input features are normalized to their means and standard deviations. To do this, a pre-run may be carried out using, for example, the statistics calculator described in currently unpublished United Kingdom patent application nos. GB2213111.4 and GB2213110.6 by the same applicant. Alternatively, other methods of calculating the normalisation factors may be used, such as classical formulae for the standard deviation and mean, for example. The rescaling factors may be stored in a memory, represented by block 204a. The rescaling factors may be updated from time to time, either in an offline process or by updating them in real-time.

Following rescaling, the rescaled feature values {F'} are then passed to block 205, where the estimate of the SNR characteristic is determined by the machine learning agent, in the manner described above.

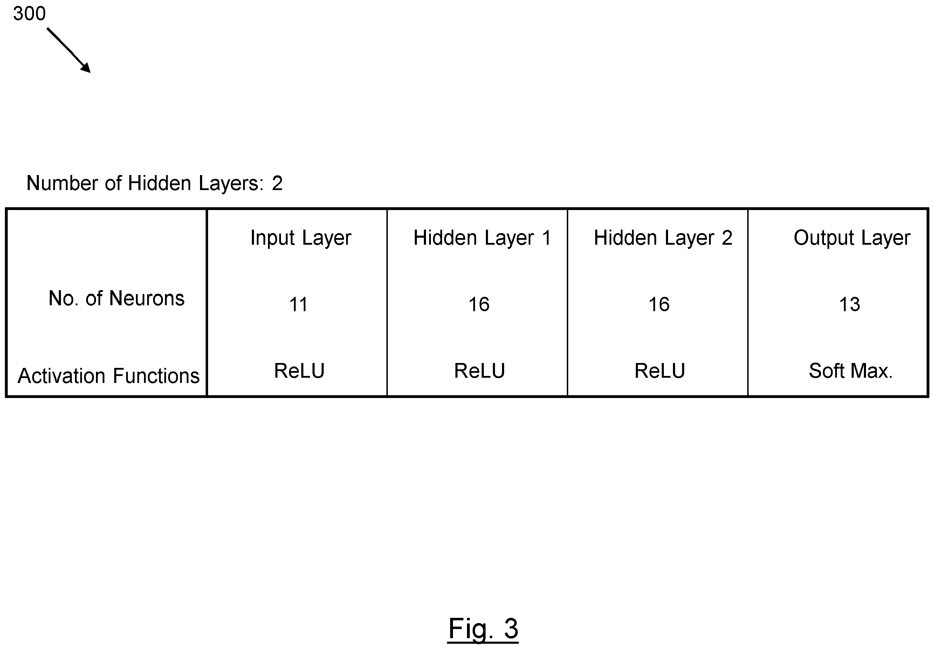

Figure 3 illustrates properties of a machine learning agent 300 according to an embodiment. In this embodiment, an ANN is used as the machine learning agent. The input layer has 11 inputs, the output layer has 13 outputs and two hidden layers are employed, each having 16 nodes. "ReLU" denotes "RectiLinear Unit" and "Soft Max" represents a function that turns a vector of K real values into a vector of K real values that sum to 1. This is used to normalise the output vector, as is described in more detail below.

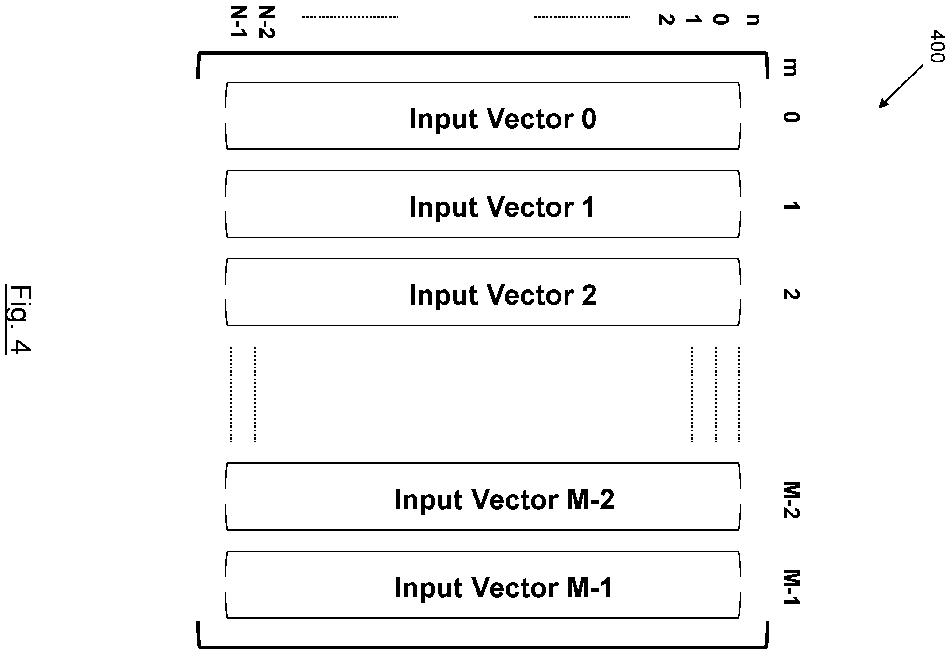

Attention is now turned to how the input and output vectors to and from the machine learning agent are constructed. In embodiments, the ANN uses a mini batch processing method of the type known in the art. Accordingly, the inputs to the ANN can be represented by a matrix of column vectors. If all of the 11 features described above are used, each column vector has 11 elements (numbered $n = 0$ to $n = N-1$, where $N=11$) corresponding to the features (either rescaled, normalised or unscaled). A typical batch size may be 128 column vectors (numbered $m = 0$ to $m = M-1$, where $M=128$). Such a mini batch input is shown in Figure 4. The batch size represents the number of feature vectors given to the ANN for each forward and backward processing/training iteration.

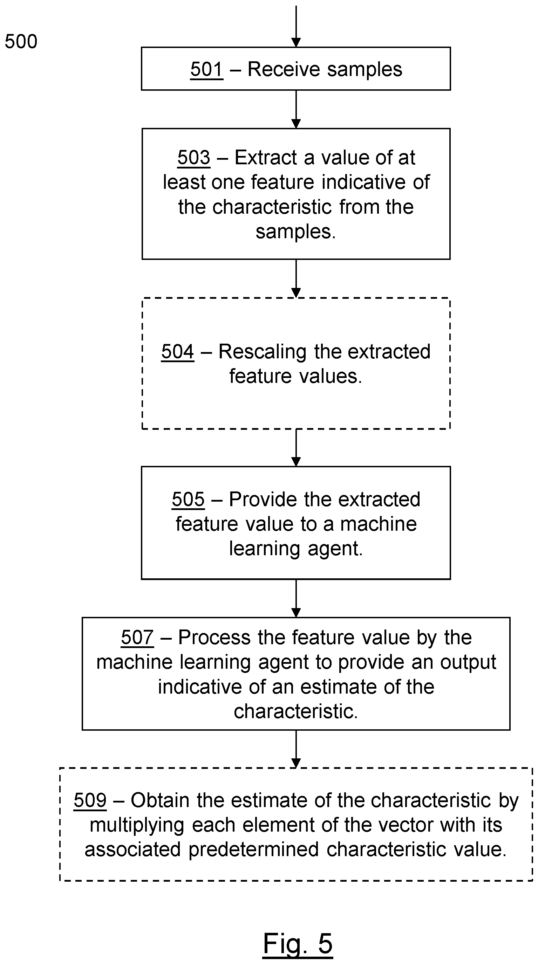

Turning attention to the machine learning agent (e.g. ANN) output, in embodiments the output comprises a vector comprising elements corresponding to the probabilities of different predetermined characteristic (e.g. SNR) values. Figure 5 is a flow diagram corresponding to a method 500 of determining an estimate of a characteristic of a set of samples according to embodiments of the disclosure. In a first step 501, the method comprises receiving the samples at a processor. Next, in step 503, a value of at least one feature indicative of the characteristic is extracted from the samples. In embodiments, in a following, optional step 504, the extracted feature values are rescaled. Next, in step 505, the at least one extracted feature value is provided as an input to a machine learning agent (e.g. an ANN). Next, in step 507, the machine learning agent processes the at least one extracted feature value to provide an output indicative of the estimate of the characteristic. The output of the machine learning agent is a vector comprising elements corresponding to the probabilities associated with different predetermined characteristic values. In a final, optional step 509, in embodiments the estimate of the characteristic is obtained by multiplying each element of the vector with its associated predetermined characteristic value.

The method 500 described with reference to Figure 5 is applicable to any general set of samples and any characteristic that it is desired to estimate from the samples. For example, the samples could be samples of a medical image and the characteristic could be bone density. However, specific embodiments of this method are described herein with reference to the communications system of Figure 2, in which the samples correspond to samples of a (received) signal and the characteristic is a signal-to-noise ratio characteristic (expressed either in dBs, on a linear scale, or $E_b/N_0$, for example). The method 500 enables the machine learning agent to output any real value in a specified range (i.e. the output is not restricted to integer values). This is illustrated below with two specific examples.

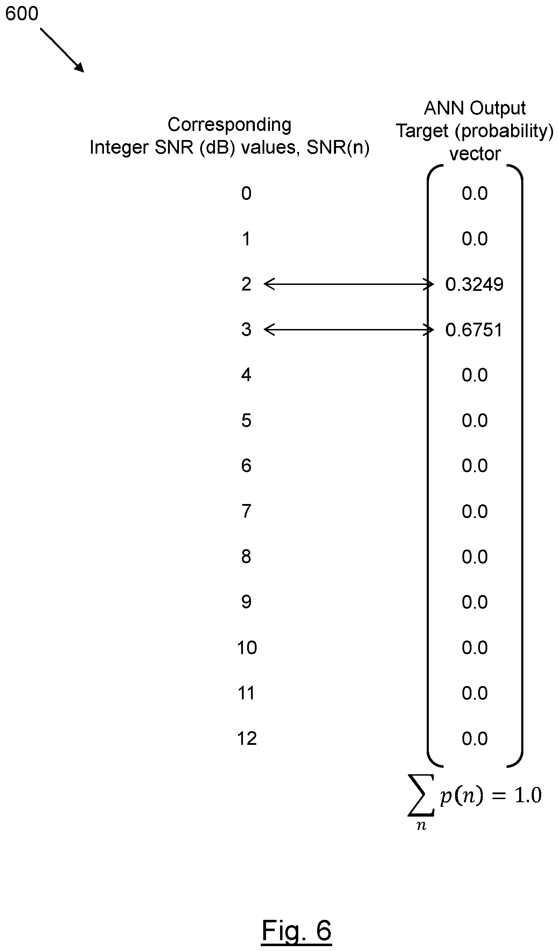

With each system, a range can be identified, the minimum value of which is the minimum SNR, $SNR_{min}$, that can occur in the system and the maximum value corresponding to the maximum SNR, $SNR_{max}$, that can occur in the system. During training of the ANN, an nth output target probability vector, {p(n)} is generated by first generating an nth random target SNR value (used to train the system), $SNR_n$. The next step is to determine the two integer SNR values that $SNR_n$ lies between. SNRs can be expressed in dBs or in linear numbers (note: when linear numbers are used a further step is generally employed in terms of generating a SNR/probability look-up table - this is explained later). With reference to Figure 6, as an example of when the characteristic is the SNR expressed in dBs, if a random SNR of 2.6751 dB is generated as part of the ANN training, then the two integer dB values that this value lies between can be found by calculating $\{SNR_L = FLOOR(SNR_n), SNR_U = CEIL(SNR_n)\}$ which will give $\{SNR_L = 2, SNR_U = 3\}$, i.e. as expected 2.6751 dB lies between $SNR_L = 2$ dB and $SNR_U = 3$ dB. Note "FLOOR" and "CEIL" refer to rounding the value down and up to the nearest integer respectively. In an example system, the range of SNR of interest may be 0 dB to 12 dB. Working directly with dB and with this range enables the integer dB values to also represent the vector element number (which also goes from 0 to 12).

Continuing with this example, the output probability vector will have 13 elements, each being representative of the probability of occurrence of the corresponding, integer, SNR value (in dB). Denoting the probability vector by {p(n)}, where p(0) can be read as the probability that a SNR value of 0dB occurs, p(1) can be read as the probability that a SNR value of 1dB occurs, p(2) can be read as the probability that a SNR value of 2dB occurs, then, having found the two integer values the randomly generated $SNR_n$ value lies between, two probability relationships should hold. The first is that the sum of the lower SNR value, $SNR_L$, multiplied by its probability, $p(SNR_L)$, and the upper SNR value, $SNR_U$, multiplied by its probability, $p(SNR_U)$, is equal to the randomly generated value, $SNR_n = 2.6751$, i.e:

$$SNR_n = SNR_L . p(SNR_L) + SNR_U . p(SNR_U)$$

Accordingly, in embodiments, the method further comprises obtaining the estimate of the characteristic, i.e. $SNR_n$, by multiplying each element of the probability vector with its associated predetermined characteristic value, as represented by the equation above.

A second relationship stems from the fact that, since some value must always occur, the sum of all probabilities in the vector should be equal to 1. However all p(n), except $p(SNR_L)$ and $p(SNR_U)$ will be zero, hence the second relationship is that the sum of the probabilities associated with the lower and upper integer SNRs should be equal to 1, i.e.

$$1.0 = p(SNR_L) + p(SNR_U)$$

These two equations can be solved to find $p(SNR_L)$ and p(SNRu) - used to train the ANN. In the example, 2.6751 = 2.p(2)+3.p(3), and 1.0 = p(2)+p(3). Solving gives p(2)=0.3249 and p(3) = 0.6751. The output probability vector derived for the randomly generated SNR of 2.6751dB is thus {0.0, 0.0, 0.3249, 0.6751, 0.0, 0.0, 0.0, 0.0, 0.0, 0.0, 0.0, 0.0, 0.0}, as seen in Figure 6.

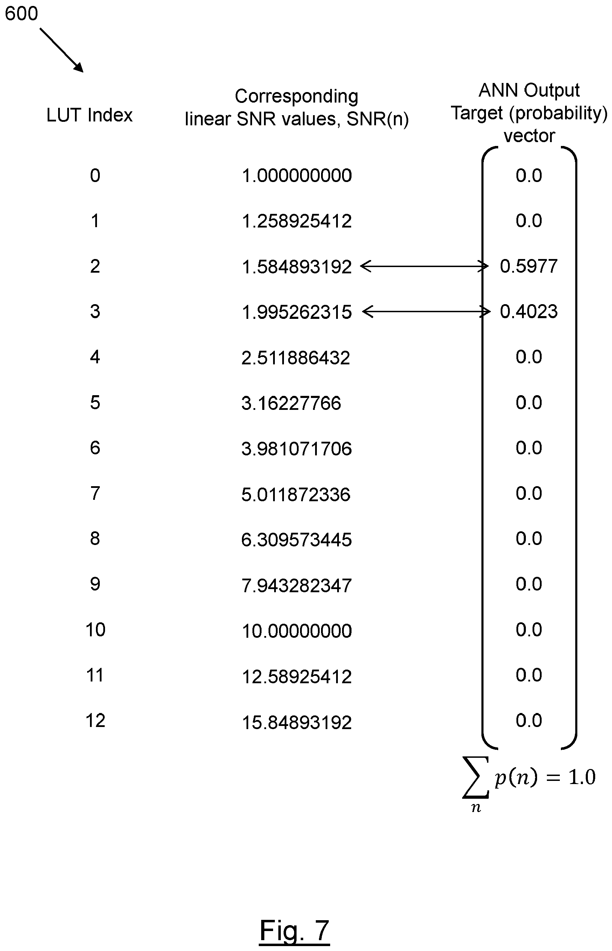

A further example is now illustrated with reference to Figure 7. Here, the signal characteristic being estimated is the SNR expressed on a linear scale, as opposed to being expressed in dBs. There is no longer a direct relationship between the SNR value (since it is now linear) and the element index value in the vector, as seen in Figure 7. In this example, keeping the SNR range the same (0 to 12dB), the corresponding linear range can be seen to be 1.0 to 15.84893192. A similar process is followed, whereby a random target SNR is generated, in the example this value is $SNR_n$ = 1.75 (lin.) and the two values, held in a Look Up Table (LUT), between which $SNR_n$ lies is found (in the example, this corresponds to $SNR_L$ = 1.584893192, and, SNRu = 1.995262315). The lower value, $SNR_L$, is then taken as the value previous to SNRu. Following a process similar to that described above with reference to Figure 6, with $SNR_L$ = 1.584893192 (from LUT) and $SNR_U$ = 1.995262315 and using the index of each to determine where the output probabilities will lie in the target (probability) vector gives p(2)=0.59766269, and, p(3)=0.40233731. The output probability vector derived for the randomly generated SNR of 1.75 (lin.) is thus {0.0, 0.0, 0.59766269, 0.40233731, 0.0, 0.0, 0.0, 0.0, 0.0, 0.0, 0.0, 0.0, 0.0}, as seen in Figure 7.

For training of the ANN, the target vectors (derived in the manner described above) are used as the first step during the back propagation of the ANN. The target vectors are compared to the ANN output - which is first normalized because the ANN output vectors should also be probabilistic in nature, that is, the sum of all the elements when expressed in probability form must equal 1.0. The elements, $\{\hat{q}_n\}$, of each ANN un-normalized output vector, $v_o$, from the ANN (after forward propagation is complete) are normalized by the sum of all the elements in that vector, to form the probability vector, $v_p$, with probability elements, $\{q_n\}$, i.e.:

$$q_n = \frac{\hat{q}_n}{\sum_n \hat{q}_n}$$

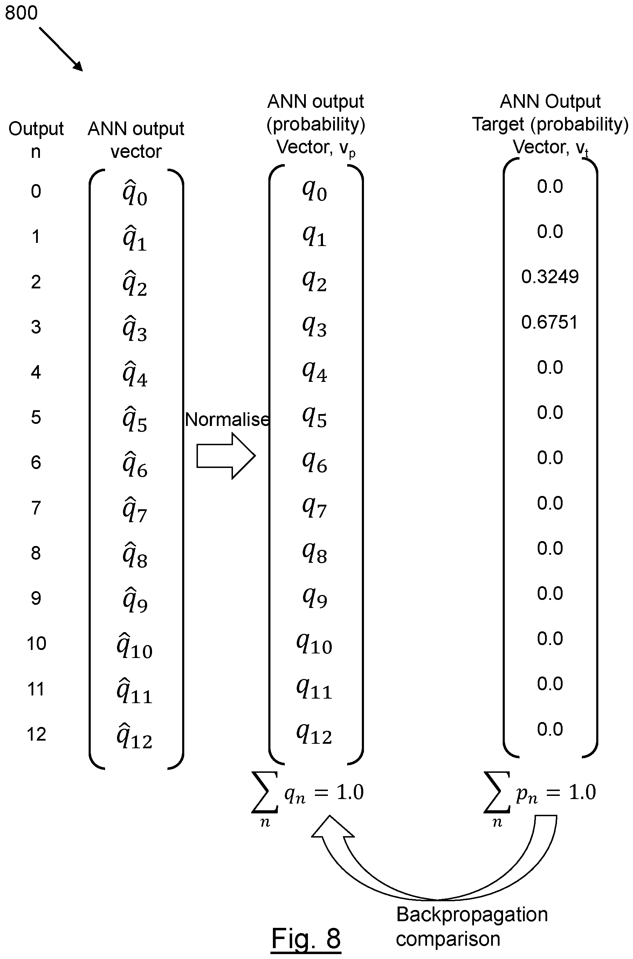

The first stage of training: back propagation, construction and comparison of ANN output probability vectors, {vp} and ANN output target (probability) vectors, {$v_t$} is indicated in Figure 8. It will be appreciated that in embodiments, prior to the step of providing the two or more extracted feature values as inputs to the machine learning agent, an initial training process of the machine learning agent is performed. The initial training process is continued until a pre-determined accuracy is attained. Furthermore, the machine learning agent may undergo additional training in use. In a communications system, this additional training/learning may be based on actual received signal samples, for example.

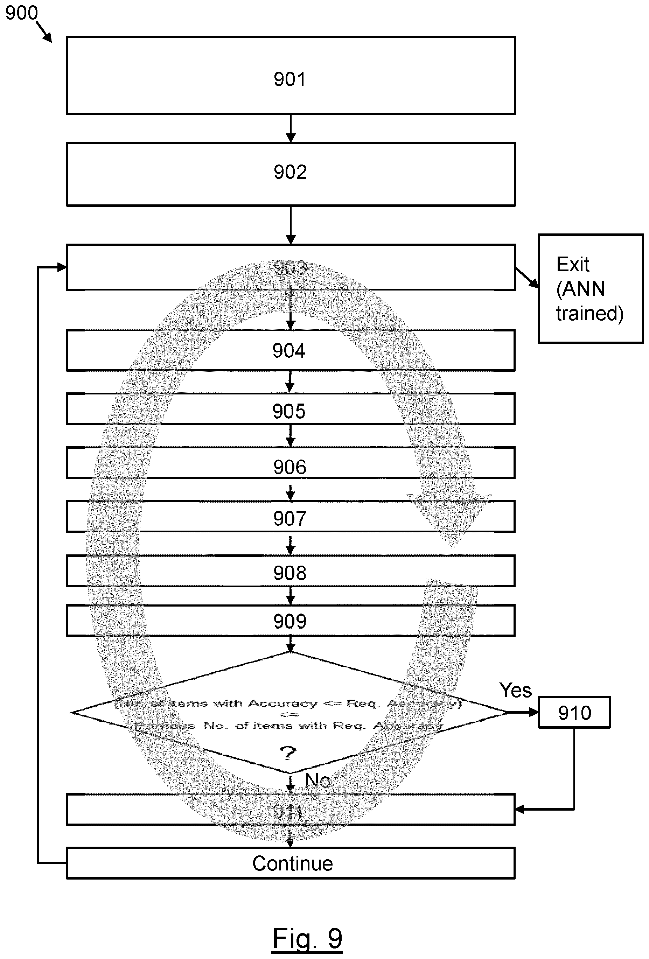

Figure 9 is a flow diagram 900 that represents an example of the processing to train an ANN to be able to estimate the SNR of a received signal in a communications system. The start of the process 901 involves reading in the communication system parameters, reading in the ANN parameters, setting up required random number generators, assigning dynamic memory storage and initializing ANN weights and biases. A pre-processing loop 902 is then executed, in order to derive the normalization parameters (with reference to blocks 204a and 204 in Figure 2) for the features which will be derived from the noisy, received, signal. In this example, these normalization parameters are then frozen - they could however be updated on a continuous basis and used on a dynamic basis. Once the normalization parameters have been found, the process enters the ANN training loop at 903. The first part/module in the loop is to generate, in step 904:

> (1) Input (mini batch) data - a matrix of input vectors, the elements of each vector correspond to feature values, as explained above; and
>
> (2) Output target probability vectors (together with the associated channel SNR value - to be used later in the loop).

This is then followed, at 905, by generating the communications system outputs which then have, at step 906, (channel) noise added to them. The noisy communications system outputs (after the channel) are then used in step 907 to form the ANN (normalized) input features - using the normalization parameters found in the earlier pre-processing stage. The ANN input features are formatted into a matrix (a mini batch), each column of which is a vector of features (11 features in this example).

The mini batch is then subject, in step 908, to ANN forward propagation to generate the ANN outputs. These outputs are then processed as detailed above, i.e. to normalise them. After this processing, there will exist a set of ANN-derived SNR output probability vectors, which are then turned into the ANN output $E_b/N_0$ or SNR estimates. These estimates are then compared, in step 909, with the target values to see how many of the processed ANN output estimates are within a specified distance (e.g. 0.1 dB) from the target value. The number with the required accuracy is compared to the last highest number (obtained from a previous pass through the loop). If the current number is higher than the last highest number, the ANN weights and biases are written to an output (text file) in step 910, i.e. stored, and the last highest number is replaced with the current number (the current number might also be stored in the text file to enable processing to carry on from the last best result should the number of iterations through the training loop prove to be insufficient for appropriate convergence). In step 911, ANN back propagation is then carried out, using, for example, the Statistical Gradient Descent (SGD), Batch Gradient Descent (BGD) or Mini Batch Gradient Descent (MBGD), as in this example,method together with ADAptive Moments (ADAM) optimisation.

If the number of training epochs/iterations has not been exceeded, the process loops back and continues. If the number of training epochs/iterations has been equalled the process will stop. Should the accuracy and training results prove to be acceptable, the weights and biases can then be frozen, the training loop can be removed and the (trained) ANN can be used as a plug-in module to a communications system for estimating an SNR characteristic of a signal.

An example communications system has been modelled/simulated and results indicate that the methods disclosed herein exceed the performance of standard, classical, methods in two ways:

> (1) More accurate values at any given $E_b/N_0$ or SNR; and
>
> (2) More consistently accurate values over the entire range of $E_b/N_0$ or SNR of interest.

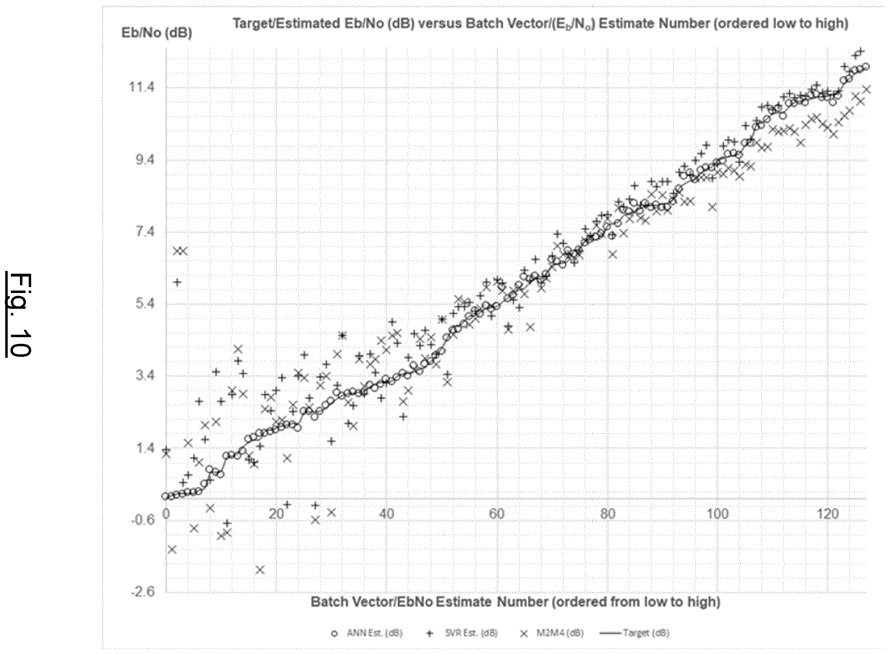

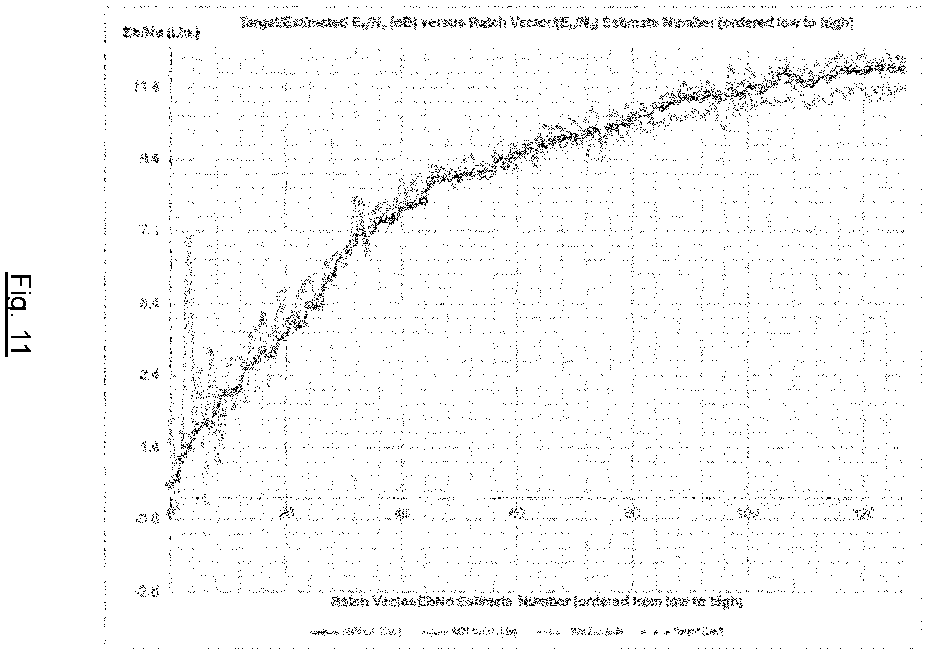

Graphs that indicate this are given in Figure 10 (SNR in dBs) and Figure 11 (linear SNR). Figure 10 is a snapshot of 128 random SNR estimations (in dBs) where the method has over 79% of its batch estimations within 0.1dB of the actual value.

Figure 11 is a snapshot of 128 random SNR estimations (linear) where the method has over 75% of its instantaneous batch estimations within 0.1 (linear) of the actual value. It shall be noted that methods according to the present disclosure outperform the two classical methods known as the SVR and M2M4 methods.

It should be appreciated that the method described with reference to Figure 1, and other Figures herein, is also applicable to determining an estimate of any general characteristic of a signal. Accordingly, the present disclosure also provides a method of determining an estimate of a characteristic of a signal. The method comprises, at a processor: receiving samples of the signal; extracting, from the samples, values of two or more features indicative of the characteristic; providing the two or more extracted feature values as inputs to a machine learning agent; and causing the machine learning agent to process the extracted feature values to provide the estimate of the characteristic.

Methods according to embodiments of the present disclosure may be applied to any type of signal, for example any digitally modulated signal. In embodiments, more than two features indicative of the signal-to-noise ratio characteristic may be input to the machine learning agent. For example, at least 10 features may be used, or at least 15 features may be used. In general, any features which vary with signal to noise ratio may be used. In this manner, the machine learning agent itself is allowed to determine what is relevant information and what is not, i.e. no pre-selection of a subset of specific features is necessary.

In embodiments, the signal samples may be fed directly to feature extraction without any prior, intervening signal processing steps (such as framing, windowing or performing a Fourier transform). In this manner, methods according to embodiments of the disclosure can work in the time domain (although features from the frequency domain could also be used). Avoiding the use of a Fourier transform reduces complexity and may improve the latency associated with the signal-to-noise estimation. Furthermore, methods according to embodiments of the disclosure do not require any prior information about the codec involved in the encoding of the signal of which the signal-to-noise ratio is to be determined. It should be appreciated that methods according to embodiments of the disclosure can provide an analogue (i.e. continuous) value for the estimate of the signal to noise ratio, as opposed to a discretised estimate or a threshold estimate (i.e. whether the SNR is merely "good" or "bad", for example). It should be appreciated that according to embodiments of the disclosure, a direct SNR estimation is obtained, and methods disclosed herein may not require any post-processing or formula-based mapping of the output of the machine learning agent.

In embodiments, it is not required to define anything such as an SNR "class", for example. In this manner, an accurate estimation of the SNR can be obtained with no class association. Embodiments of the disclosure consider an entire, analogue, SNR range (from minimum expected to maximum expected), without the need for training data subsets to estimate SNR.

The methods as described above may each be comprised in or implemented in apparatus comprising a processor or processing system. The processing system may comprise one or more processors and/or memory. One or more aspects of the embodiments described herein comprise processes performed by apparatus. In some examples, the apparatus comprises one or more processing systems or processors configured to carry out these processes. In this regard, embodiments may be implemented at least in part by computer software stored in (non-transitory) memory and executable by the processor, or by hardware, or by a combination of tangibly stored software and hardware (and tangibly stored firmware). Embodiments also extend to computer programs, particularly computer programs on or in a carrier, adapted for putting the above described embodiments into practice. The program may be in the form of non-transitory source code, object code, or in any other non-transitory form suitable for use in the implementation of processes according to embodiments. The carrier may be any entity or device capable of carrying the program, such as a RAM, a ROM, or an optical memory device, etc.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. A method of determining an estimate of a characteristic of a set of samples, the method comprising, at a processor:

   receiving the set of samples;
   extracting, from the samples, a value of at least one feature indicative of the characteristic;
   providing the at least one extracted feature value as an input to a machine learning agent; and
   causing the machine learning agent to process the at least one extracted feature value to provide an output indicative of the estimate of the characteristic, wherein:
   the output of the machine learning agent is a vector comprising elements corresponding to the probabilities associated with different predetermined characteristic values.

2. The method of claim 1, further comprising obtaining the estimate of the characteristic by multiplying each element of the vector with its associated predetermined characteristic value.

3. The method of claim 1 or 2, further comprising normalizing the output vector of the machine learning agent.

4. The method of any preceding claim, wherein the predetermined characteristic values are held in a lookup table, or wherein the predetermined characteristic values are given directly by the vector element index.

5. The method of any preceding claim, wherein in the output vector of the machine learning agent, all vector elements are equal to zero except for two adjacent vector elements.

6. The method of any preceding claim, wherein the set of samples comprises samples of a signal in a communications system.

7. The method of claim 6, wherein the characteristic is a signal-to-noise ratio characteristic, wherein the signal-to-noise ratio characteristic is the ratio of the signal power to the noise power, expressed either on a decibel scale or a linear scale, or the signal-to-noise ratio characteristic is the signal-to-noise ratio per bit, $E_b/N_0$.

8. The method of claim 7, wherein the at least one feature comprises the variance, $M_2$, of the signal samples, wherein

$$M_2 = \frac{1}{N}\sum_{t=0}^{t=N-1}(z_t - M_1)(z_t - M_1)^*$$

, wherein $M_1$ is the mean of the signal samples, $z_t$, and $N$ is the total number of samples.

9. The method of claim 7 or 8, wherein the at least one feature comprises the in-phase part, $\alpha_r$, of the third moment of the signal samples, $M_3$, wherein $\alpha_r = \frac{1}{N.M_2^{3/2}}\sum_{t=0}^{t=N-1}(x_t - \mu_r)^3$ and/or the quadrature part, $\alpha_i$, of the third moment, wherein $\alpha_i = \frac{1}{N.M_2^{3/2}}\sum_{t=0}^{t=N-1}(y_t - \mu_i)^3$, wherein $M_2$ is the variance of the signal samples $z_t = x_t + j.y_t$ and $N$ is the total number of samples.

10. The method of any one of claims 7 to 9, wherein the at least one feature comprises the fourth moment of the signal samples, $M_4$, wherein $M_4 = \frac{1}{N}\sum_{t=0}^{t=N-1}[(z_t - M_1)(z_t - M_1)^*]^2$, $N$ is the total number of samples $z_t$, and $M_1$ is the first moment.

11. The method of any one of claims 7 to 10, wherein the at least one feature comprises the Kurtosis value, which is given by the fourth moment of the signal samples, $M_4$, normalized by the second moment squared of the signal samples, $M_2^2$, wherein $M_4 = \frac{1}{N}\sum_{t=0}^{t=N-1}[(z_t - M_1)(z_t - M_1)^*]^2$, $N$ is the total number of samples $z_t$, $M_2 = \frac{1}{N}\sum_{t=0}^{t=N-1}(z_t - M_1)(z_t - M_1)^*$, and wherein $M_1$ is the mean of the signal samples.

12. The method of any one of claims 7 to 11, wherein the at least one feature comprises the critical part, $\lambda$, of the $M_2M_4$ estimator of the signal samples, wherein $\lambda = 2.M_2^2 - M_4$, wherein $M_4 = \frac{1}{N}\sum_{t=0}^{t=N-1}[(z_t - M_1)(z_t - M_1)^*]^2$, $N$ is the total number of samples $z_t$, $M_2 = \frac{1}{N}\sum_{t=0}^{t=N-1}(z_t - M_1)(z_t - M_1)^*$, and wherein $M_1$ is the mean of the signal samples.

13. The method of any one of claims 7 to 12, wherein the at least one feature comprises the critical part, $\beta$, of the signal to variance ratio, wherein $\beta = \frac{\alpha}{M_4 - \alpha}$, and $\alpha = \sum(z_n z_n^*)(z_{n-1} z_{n-1}^*)$.

14. A computer program comprising a set of instructions, which, when executed by computerised apparatus, cause the computerised apparatus to perform a method of determining an estimate of a characteristic of a set of samples, the method comprising, at a processor:

   receiving the set of samples;
   extracting, from the samples, a value of at least one feature indicative of the characteristic;
   providing the at least one extracted feature value as an input to a machine learning agent; and
   causing the machine learning agent to process the at least one extracted feature value to provide an output indicative of the estimate of the characteristic, wherein:
   the output of the machine learning agent is a vector comprising elements corresponding to the probabilities associated with different predetermined characteristic values.

15. Apparatus for determining an estimate of a characteristic of a set of samples, the apparatus comprising a processor configured to:

   receive the set of samples;

extract, from the samples, a value of at least one feature indicative of the characteristic;

provide the at least one extracted feature value as an input to a machine learning agent; and

cause the machine learning agent to process the at least one extracted feature value to provide an output indicative of the estimate of the characteristic, wherein: the output of the machine learning agent is a vector comprising elements corresponding to the probabilities associated with different predetermined characteristic values.

100

101 – Receive signal samples

103 – Extract values of two or more features indicative of the SNR characteristic from the samples.

104 – Rescaling the extracted feature values.

105 – Provide the extracted feature values to a machine learning agent.

107 – Process the feature values by the machine learning agent to provide an estimate of SNR characteristic.

Fig. 1

EP 4 391 422 A1

Fig. 2

300

Number of Hidden Layers: 2

| | Input Layer | Hidden Layer 1 | Hidden Layer 2 | Output Layer |
|---|---|---|---|---|
| No. of Neurons | 11 | 16 | 16 | 13 |
| Activation Functions | ReLU | ReLU | ReLU | Soft Max. |

<u>Fig. 3</u>

EP 4 391 422 A1

400

| m | 0 | 1 | 2 | | M-2 | M-1 |
|---|---|---|---|---|---|---|

n
0
1
2

N-2
N-1

Input Vector 0    Input Vector 1    Input Vector 2       Input Vector M-2    Input Vector M-1

Fig. 4

500

```
501 – Receive samples
```

```
503 – Extract a value of at
least one feature indicative of
the characteristic from the
samples.
```

```
504 – Rescaling the extracted
feature values.
```

```
505 – Provide the extracted
feature value to a machine
learning agent.
```

```
507 – Process the feature value by the
machine learning agent to provide an output
indicative of an estimate of the
characteristic.
```

```
509 – Obtain the estimate of the characteristic by
multiplying each element of the vector with its
associated predetermined characteristic value.
```

Fig. 5

600

| Corresponding Integer SNR (dB) values, SNR(n) | ANN Output Target (probability) vector |
|:---:|:---:|
| 0 | 0.0 |
| 1 | 0.0 |
| 2 ← | → 0.3249 |
| 3 ← | → 0.6751 |
| 4 | 0.0 |
| 5 | 0.0 |
| 6 | 0.0 |
| 7 | 0.0 |
| 8 | 0.0 |
| 9 | 0.0 |
| 10 | 0.0 |
| 11 | 0.0 |
| 12 | 0.0 |

$$\sum_n p(n) = 1.0$$

## Fig. 6

600

| LUT Index | Corresponding linear SNR values, SNR(n) | ANN Output Target (probability) vector |
|:---:|:---:|:---:|
| 0 | 1.000000000 | 0.0 |
| 1 | 1.258925412 | 0.0 |
| 2 | 1.584893192 | 0.5977 |
| 3 | 1.995262315 | 0.4023 |
| 4 | 2.511886432 | 0.0 |
| 5 | 3.16227766 | 0.0 |
| 6 | 3.981071706 | 0.0 |
| 7 | 5.011872336 | 0.0 |
| 8 | 6.309573445 | 0.0 |
| 9 | 7.943282347 | 0.0 |
| 10 | 10.00000000 | 0.0 |
| 11 | 12.58925412 | 0.0 |
| 12 | 15.84893192 | 0.0 |

$$\sum_{n} p(n) = 1.0$$

Fig. 7

800

| Output n | ANN output vector | ANN output (probability) Vector, $v_p$ | ANN Output Target (probability) Vector, $v_t$ |
|---|---|---|---|
| 0 | $\hat{q}_0$ | $q_0$ | 0.0 |
| 1 | $\hat{q}_1$ | $q_1$ | 0.0 |
| 2 | $\hat{q}_2$ | $q_2$ | 0.3249 |
| 3 | $\hat{q}_3$ | $q_3$ | 0.6751 |
| 4 | $\hat{q}_4$ | $q_4$ | 0.0 |
| 5 | $\hat{q}_5$ | $q_5$ | 0.0 |
| 6 | $\hat{q}_6$ | $q_6$ | 0.0 |
| 7 | $\hat{q}_7$ | $q_7$ | 0.0 |
| 8 | $\hat{q}_8$ | $q_8$ | 0.0 |
| 9 | $\hat{q}_9$ | $q_9$ | 0.0 |
| 10 | $\hat{q}_{10}$ | $q_{10}$ | 0.0 |
| 11 | $\hat{q}_{11}$ | $q_{11}$ | 0.0 |
| 12 | $\hat{q}_{12}$ | $q_{12}$ | 0.0 |

Normalise

$$\sum_n q_n = 1.0 \qquad \sum_n p_n = 1.0$$

Backpropagation comparison

<u>Fig. 8</u>

900

901

902

903 → Exit (ANN trained)

904

905

906

907

908

909

(No. of items with Accuracy <= Req. Accuracy)
<=
Previous No. of items with Req. Accuracy
?

Yes → 910

No

911

Continue

Fig. 9

Fig. 10

## Fig. 11

Europäisches
Patentamt

European
Patent Office

Office européen
des brevets

# EUROPEAN SEARCH REPORT

Application Number

EP 23 21 9164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/314197 A1 (DING YACONG [US] ET AL) 7 October 2021 (2021-10-07) | 1-5,14, 15 | INV. H04B17/336 H04B17/309 |
| Y | * paragraph [0052] - paragraph [0071] * | 1-15 | |
| X | CN 114 513 395 A (UNIV HEILONGJIANG) 17 May 2022 (2022-05-17) | 1,3-6, 14,15 | |
| A | * paragraph [0004] - paragraph [0026] * | 2,7-13 | |
| Y | WO 2010/015371 A1 (FRAUNHOFER GES FORSCHUNG [DE]; UHLE CHRISTIAN [DE] ET AL.) 11 February 2010 (2010-02-11) * page 13, line 9 - page 14, line 24 * * page 30, line 13 - line 27 * | 1-15 | |
| Y | SHEN LU ET AL: "SIDOND: Single-Input Dual-Output Network for Radar Target Detection in Complex Environment", 2021 CIE INTERNATIONAL CONFERENCE ON RADAR (RADAR), IEEE, 15 December 2021 (2021-12-15), pages 2263-2266, XP034286873, DOI: 10.1109/RADAR53847.2021.10028574 [retrieved on 2023-02-08] | 1-7,14, 15 | |
| A | * section III; figures 1, 3 * | 8-13 | |

TECHNICAL FIELDS SEARCHED (IPC)

H04B
G06N

The present search report has been drawn up for all claims

| Place of search | Date of completion of the search | Examiner |
|---|---|---|
| The Hague | 3 May 2024 | Riposati, Benedetto |

EPO FORM 1503 03.82 (P04C01)

## ANNEX TO THE EUROPEAN SEARCH REPORT
## ON EUROPEAN PATENT APPLICATION NO.

**EP 23 21 9164**

This annex lists the patent family members relating to the patent documents cited in the above-mentioned European search report.
The members are as contained in the European Patent Office EDP file on
The European Patent Office is in no way liable for these particulars which are merely given for the purpose of information.

**03-05-2024**

| Patent document cited in search report | | Publication date | Patent family member(s) | | Publication date |
|---|---|---|---|---|---|
| US 2021314197 | A1 | 07-10-2021 | CN | 113497771 A | 12-10-2021 |
| | | | KR | 20210124008 A | 14-10-2021 |
| | | | TW | 202139659 A | 16-10-2021 |
| | | | US | 2021314197 A1 | 07-10-2021 |
| CN 114513395 | A | 17-05-2022 | NONE | | |
| WO 2010015371 | A1 | 11-02-2010 | AU | 2009278263 A1 | 11-02-2010 |
| | | | CA | 2732723 A1 | 11-02-2010 |
| | | | CN | 102124518 A | 13-07-2011 |
| | | | EP | 2151822 A1 | 10-02-2010 |
| | | | ES | 2678415 T3 | 10-08-2018 |
| | | | HK | 1159300 A1 | 27-07-2012 |
| | | | JP | 5666444 B2 | 12-02-2015 |
| | | | JP | 2011530091 A | 15-12-2011 |
| | | | KR | 20110044990 A | 03-05-2011 |
| | | | RU | 2011105976 A | 27-08-2012 |
| | | | TR | 201810466 T4 | 27-08-2018 |
| | | | US | 2011191101 A1 | 04-08-2011 |
| | | | WO | 2010015371 A1 | 11-02-2010 |

EPO FORM P0459

For more details about this annex : see Official Journal of the European Patent Office, No. 12/82

**REFERENCES CITED IN THE DESCRIPTION**

**Patent documents cited in the description**

- GB 2213111 A
- GB 2213110 A